Europäisches Patentamt

European Patent Office

Office européen des brevets

(19)

(11) Publication number: 0 306 175

A2

## (12) EUROPEAN PATENT APPLICATION

(21) Application number: 88307593.9

(22) Date of filing: 16.08.88

(51) Int. Cl.4: B01D 53/34

(30) Priority: 03.09.87 DK 4604/87
21.06.88 DK 3395/88

(43) Date of publication of application:
08.03.89 Bulletin 89/10

(84) Designated Contracting States:
ES FR GB IT

(71) Applicant: F.L. Smidth & Co. A/S
77 Vigerslev Alle
DK-2500 Valby Copenhagen(DK)

(72) Inventor: Svendsen, Jorgen
77 Vigerslev Alle
DK-2500 Valby Copenhagen(DK)
Inventor: Enkegaard, Torben
77 Vigerslev Alle
DK-2500 Valby Copenhagen(DK)

(74) Representative: Jackson, Peter Arthur et al
GILL JENNINGS & EVERY 53-64 Chancery
Lane
London WC2A 1HN(GB)

(54) A method and a plant for simultaneous cleaning of flue gas for sulphur oxides and nitrogen oxides.

(57) Flyash-containing flue gas from a conventional fossil fuel fired boiler plant and/or flyash separated in the flue gas filter of the plant is admixed with ground, dry limestone (2, 23), heated in a heat exchanger (3, 17) to approx. 750°C and passed to a suspension reactor (4) in which the temperature by burning the carbon contained in the flyash and supplemented, if necessary, with fuel added to the reactor separately (5) is raised to 800 to 900°C, there being also added simultaneously to the flue gas ammonia at (6, 6a) either to the reactor (4) or immediately after same in duct (16), whereby the heat treatment in the reactor causes the $SO_x$ content of the flue gas to become bonded as $CaSO_4$, while its $NO_x$ content reacts with the $NH_3$ to form free nitrogen and water vapour. Heating of the boiler flue gas in the heat exchanger (3, 17) is either effected by passing the approx. 900°C hot exhaust gas from the separator cyclone (7) of the suspension reactor (4) directly to the heat exchanger or by a part of the ashes (12) separated in the flue gas filter (11) being passed to a heat exchanger (18) coupled after the reactor (4), heated by using the exhaust gas of the separator cyclone (7) to approx. 850°C and bypassing the reactor being passed as heat-transfer medium to the heat exchanger (17) upstream of the reactor, whereupon the partly cooled ashes are recycled by conveyor means (21, 22) to the heat exchanger (18) for renewed heating, and where during the recycling step ground limestone (23) is added for the $SO_x$ cleaning process in the reactor (4).

# A METHOD AND A PLANT FOR SIMULTANEOUS CLEANING OF FLUE GAS FOR SULPHUR OXIDES AND NITROGEN OXIDES

The present invention relates to a method and a plant for simultaneous cleaning of flyash-containing flue gas fro a fossil fuel boiler plant, such as a power station, form the sulphur oxides ($SO_x$) and nitrogen oxides ($NO_x$) contained in the flue gas. The constantly increasing number of fossil fuel fired boiler plants on a global basis to keep up with the rapidly growing demand for energy has resulted in a similarly increased risk of atmospheric pollution, having thus caused several countries to impose by law drastic restrictions on the content of $SO_x$ and $NO_x$ in the flue gases deriving from such plants.

A hitherto employed means of partly complying with such restrictions as regards the emission of nitrogen oxides has been to provide the boiler plants with so-called low-$NO_x$ burners, thereby making it possible to reduce the $NO_x$ emission by 10 to 20%. These burners, however, require supplementary measures if the statutory limits are to be observed in that the burners, as indicated by their designation, only help diminishing the $NO_x$ problems, but not the $SO_x$ problems.

A method disclosed by the technical literature, see the weekly Danish publication "Ingeniøren" (The Engineer) No. 33 of August 16, 1985, with associated apparatus for removing both $NO_x$ and $SO_x$ from the boiler flue gas is based on the fact that at a temperature of 300 to 400° C and using a catalyst $NO_x$ and ammonia ($NH_3$) react to form free nitrogen ($N_2$) and water vapours, which without any harm to the environment may be discharged into the atmosphere together with the flue gas, while the $SO_x$ content therein by another immediately following catalytic process is reduced by oxidation of the $SO_2$ content of the gas at approx. 420° C so as to form $SO_3$ which in turn is hydrolyzed to give sulphuric acid ($H_2SO_4$), the latter being suitable for other purposes. Both the method and not least the apparatus for carrying out same, however, appear to be cumbersome and costly.

From rotary kiln plants with associated raw material preheater for burning powdery mineral raw materials, such as cement raw materials, it is known that $NO_x$ reduction with $NH_3$ may advantageously be accomplished by adding the ammonia to the lower cyclone step in a four-step cyclone preheater, i.e. at 800 to 900° C. Both from such rotary kiln plants and from the use of fluid-bed boilers, e.g. within the power works sector, as well as from DE-OS 2.532.471 it is known within the same temperature range apart from the $NO_x$ reduction obtained through the addition of ammonia also to achieve almost complete bonding of $SO_2$ to $CaSO_4$ (gypsum) as long as during the burning process there is the required amount of oxygen (O) and lime ($CaCO_3$) present. These methods contain, however, heavy inconveniences in the form of difficulties in dosing the added amounts of ammonia and lime in the mutually correct ratios to the plant to avoid clogging of same and in the form of demands for special internal protection of exposed parts of the plant (cyclones, riser pipes and/or smoke gas exhaust pipes) through linings, impact plates, dampers and the like. Another cleaning method is based on recirculation of the treated product in a fluid-bed boiler and is further described in DE-OS 3.235.559. It is therefore to be anticipated that fluid-bed boilers with recirculation have a quite substantial potential by way of pollution-free boilers of the future, as they offer good prospects of simultaneously accomplishing both $NO_x$ reduction with $NH_3$ and $SO_x$ removal as $CaSO_4$. Replacement of the hitherto used and still in themselves properly working power station boilers being not of the fluid-bed type merely to live up to the subsequently imposed, strict pollution regulations, however, is less desirable both in deference to conservation of resources and for economic reasons, although it must be admitted that the existing, conventional coal-fired power station boilers are not particularly suitable for direct implementation of the $SO_x$ and $NO_x$ cleaning processes. A further $SO_x$ cleaning process also based upon a recirculation of the treated product back to a reactor, such as a suspension reactor, is known from US patent No. 4,562,054 according to which the process, however, is not suited for a simultaneous $NO_x$ cleaning because the temperature in the reactor is not raised to a level where a satisfying $NO_x$ cleaning could be carried out.

It is therefore the object of the invention to provide a method and an apparatus for combined $SO_x$ and $NO_x$ cleaning of the flue gases from conventional fossil fuel fired boiler plants in that the cleaning apparatus is coupled directly after the boiler and also meets in a simple resource saving manner the cleaning requirements stipulated, overcoming at the same time the drawbacks of the hitherto known types of such aftercoupled apparatus.

A simultaneous cleaning of flyash-containing flue gas from a fossil fired boiler plant for the sulphur oxides ($SO_x$) and nitrogen oxides ($NO_x$) after ground lime ($CaCO_3$) having been added to the boiler flue gas is made partly in a suspension reactor with an appertaining separator cyclone coupled downstream of the flue gas direction to the boiler by a recirculation known per se of the coarser, still partly sulphatized fraction which has been precipitated in the cyclone separator from the product suspended in the flue gas, partly by utilization of the heat in the reactor exhaust gas and partly in a flue gas filter coupled after the separator cyclone of the suspension reactor for precipitation of the suspension fine fraction as ashes in that according to the present invention the boiler flue gas with its content of flyash and $CaCO_3$ is heated to approximately 700°C by means of the heat in the suspension reactor exhaust gas whereupon the heated boiler flue gas is fed to the suspension reactor in which the temperature is raised to 800-900°C by burning of the carbon contained in the flyash and if necessary of fuel separately fed to the reactor so that the $SO_x$ contained in the flue gas through the heat treatment in the reactor is bonded as calcium sulphate ($CaSo_4$), and in that during the heat treatment in the suspension reactor and its appertaining separator cyclone ammonia ($NH_3$) is also fed to the boiler flue gas for reduction of the $NO_x$ content of the flue gas by formation of free nitrogen ($N_2$) and water vapours. In a preferred embodiment of the invention the heating of the boiler flue gas prior to its feeding into the suspension reactor is made by using a part of the ashes separated in the flue gas filter after the heat exchange between these ashes with the exhaust gas from the suspension reactor separator cyclone as a heat transfer medium for heat exchange with the boiler flue gas before the latter is being fed to the suspension reactor, whereafter the ashes are recirculated to renewed heat exchange with the exhaust gas from the separator cyclone.

The suspension reactor is assumed to be of a type known per se, e.g. as further described in GP-PS 1,463,124, in which a substantially similar suspension reactor is described and used as a precalcinator for expelling $CO_2$ from preheated cement raw materials.

Ammonia ($NH_3$) for accomplishing the $NO_x$ reduction is added to the boiler flue gas either during the latter's stay in the suspension reactor or preferably in the gas exhaust pipe between the suspension reactor and the separator cyclone, where the optimum $NH_3$ effect will be achieved as a result of the approx. 900°C high temperature of the exhaust gas in this place.

In connection with the heat treatment in the suspension reactor the retention time of the treated flue gas will not be sufficient for achieving the desired $SO_x$ and $NO_x$ reduction of all the treated product during a single passage thereof through the reactor. It is therefore necessary to separate the coarse fraction of the ashes and recycle this coarse fraction for renewed treatment in the reactor partly to ensure thereby the ash concentration necessary for the required catalytic effect of the materials added, and partly to recirculate $CaCO_3$ in order that as much as possible of the latter is changed into $CaCO_4$. The reactions carried out in the suspension reactor or immediately after will appear from the following chemical formula:

$$x \cdot CaCO_3 + SO_2 + \tfrac{1}{2}O_2 \rightarrow CaCO_4 + (x-1)\, CaO + x \cdot CO_2$$

where $1 \leq x \leq 4$ or if necessary greater than 4, and

$$3NO + 2NH_3 \rightarrow \tfrac{5}{2}N_2 + 3H_2O.$$

The method is also suited for cleaning the flyash separated in the flue gas filter from the flue gas of a plant for the still remaining part of sulphate in the flue gas in that the flyash or part of it after preheating through heat exchange with the suspension reactor exhaust gas is returned to the suspension reactor for renewed thermic treatment (burning out of coal) and thus removal of possible sulphate.

The above described method for heating the boiler flue gas by means of the approx. 900°C hot exhaust gas of the separator cyclone may in practice involve a critical step in the process, as many heat exchangers of known type will not be able to withstand such a high inlet temperature. An alternative solution according to the invention is therefore the also described recirculation of a part of the ashes separated from the gas filter and the use of these as heat-transfer medium to direct the heat in bypassing the suspension reactor from the exhaust gas of the separator cyclone to the boiler flue gas before introducing the latter into the reactor, and after the heat exchange recycle the ashes for renewed preheating by means of the heat from the exhaust gas of the separator cyclone and for renewed use as heat-transfer medium. During this recycling step of the ashes used as heat-transfer medium the ground limestone is preferably added to the ashes for the $SO_x$ cleaning process. The limestone is thereby preheated together with the ashes and is added to the boiler flue gas during the subsequent heat exchange with the ashes prior to the introduction of the boiler flue gas into the suspension reactor.

Preheating the boiler flue gas to approx. 750°C can be ensured by heating the heat-transfer medium to a temperature of approx. 850°C prior to its introduction into the heat exchanger, which, viewed in the travelling direction of the flue gas, is coupled upstream of the suspension reactor.

The exhaust gas from the reactor separator cyclone will have a temperature of approx. 500°C. This heat is utilized in an air preheater of a type known per se for preheating the atmospheric air, which as combustion air is fed to the boiler. By such preheating of the combustion air to approx. 370°C cooling of the exhaust gas to approx. 150°C is achieved prior to introduction of the exhaust gas into the flue gas filter so that the latter will not be exposed to any damaging temperature effects from the exhaust gas.

To ensure that the required amount of oxygen is present in the suspension reactor for the desired $SO_x$ cleaning additional combustion air may in conventional manner be fed to the boiler flue gas prior to the introduction thereof into the reactor.

The invention further comprises a plant for carrying out the method. This plant is especially characterized by having a heat exchanger for utilizing the heat from the exhaust gas of the separator cyclone for heating the boiler flue gas prior to its introduction into the suspension reactor and by having in a special embodiment means for heating part of the ashes separated from the flue gas filter by means of the heat from the exhaust gas of the separator cyclone, for letting the ashes now acting as heat-transfer medium by-pass the suspension reactor to the heat exchanger upstream of the reactor and for subsequently recycling the ashes for renewed heating as heat-transfer medium as well as during this recycling step for adding to the ashes ground limestone to be introduced into the reactor together with the boiler flue gas.

The heat exchangers of the plant for heating the boiler flue gas by means of the heat from the exhaust gas of the separator cyclone through the heat-transfer medium could advantageously be cyclone heat exchangers of the counterflow type for heat exchange between gas and solid matter and preferably of the kind disclosed, for instance, by Danish Patent Application No. 1600/85.

The plant may further be characterized in comprising means for recirculating flyash separated in the flue gas filter of the plant for renewed thermic treatment in the suspension reactor.

The invention will be further explained below with reference to the drawings which in diagram form show an exemplified embodiment of an apparatus according to the invention, in that

Fig. 1 is a view of the plant with a heat exchanger which directly transfers heat from the exhaust gas of the separator cyclone to the boiler flue gas,

Fig. 2 is a view of the plant with means for transferring the heat by means of a heat-transfer medium and for adding ground limestone to the boiler flue gas via the heat-transfer medium, and

Fig. 3 shows an especially preferred embodiment of a part of the plant with means for recycling precipitated flyash to the suspension reactor.

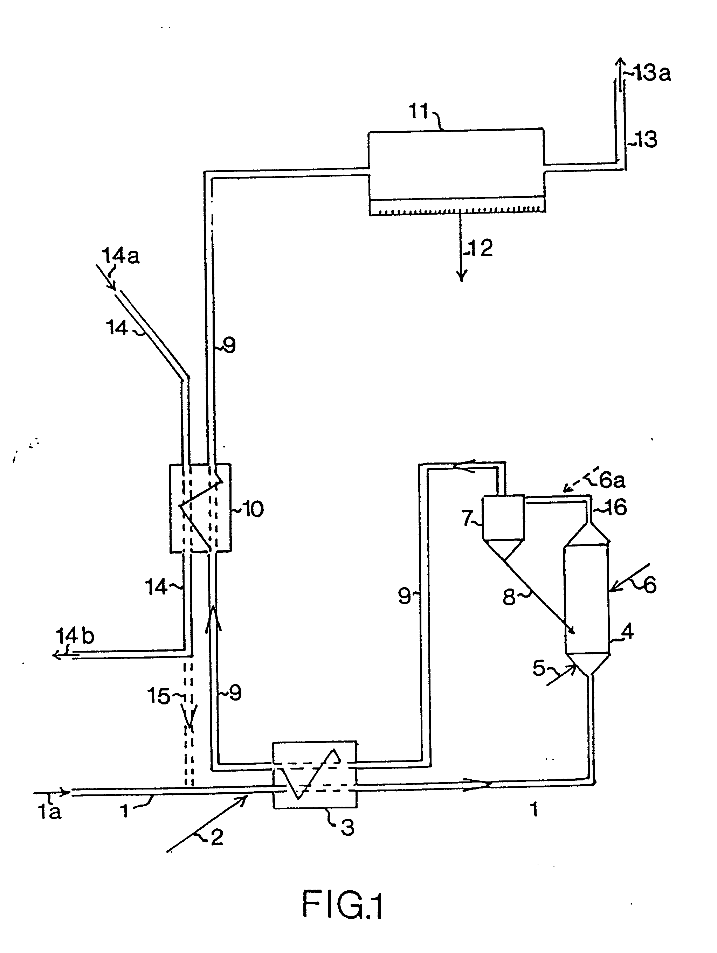

In Fig. 1 flyash-containing, approx. 350°C hot boiler flue gas is introduced at the arrow 1a directly after the boiler into the flue gas pipe 1, where at 2 there is added ground dry limestone which is suspended in the gas. The suspension is heated in the heat exchanger 3 to approx. 750°C by means of approx. 900°C hot exhaust gas from a separator cyclone 7. The now heated boiler flue gas with the added lime is fed to a suspension reactor 4 in which the temperature is raised to 800 to 900°C by burning the carbon contained in the flyash. If the temperature cannot be reached solely by this means, supplementary fuel is added at 5, as via the pipe 15 and not shown dampers additional combustion air may, if necessary, be fed to the reactor 4. The oxygen and lime present in the reactor will ensure in combination with the heat treatment in the reactor that the $SO_x$ content of the boiler flue gas is reduced, in that the sulphur oxides are bonded as $CaSO_4$ during burning in suspension in the reactor. At 6 ammonia is added to the reactor to reduce the $NO_x$ content of the boiler flue gas. Preferably the ammonia may also be added at 6a in the discharge pipe 16 for the reactor exhaust gas where the optimum temperature of approx. 900°C for conversion of the $NO_x$ content to free nitrogen and water vapour is present. In the separator cyclone 7 the still partly sulphatized coarse fraction of the ashes from the combustion in the reactor 4 is separated from the exhaust gas and recycled through the pipe 8 to the lower part of the reactor, while the exhaust gas with the fine fraction and its content of anhydrite and nitrogen is passed through the pipe 9 via the heat exchangers 3 and 10 to the filter 11, in which gypsum-containing ashes are separated to be discharged through the outlet 12, while the purified gas with its content of free nitrogen is passed via the pipe 13 at the arrow 13a to a not shown chimney. In the heat exchanger 3 the exhaust gas from the separator cyclone 7 gives off heat for heating the boiler flue gas. The exhaust gas, having now been cooled to approx. 500°C, is passed on to the heat exchanger 10 acting as air preheater, in which the heat of the exhaust gas in a known way is utilized for preheating atmospheric air 14a to approx. 370°C prior to this air being fed to the boiler as combustion air 14b.

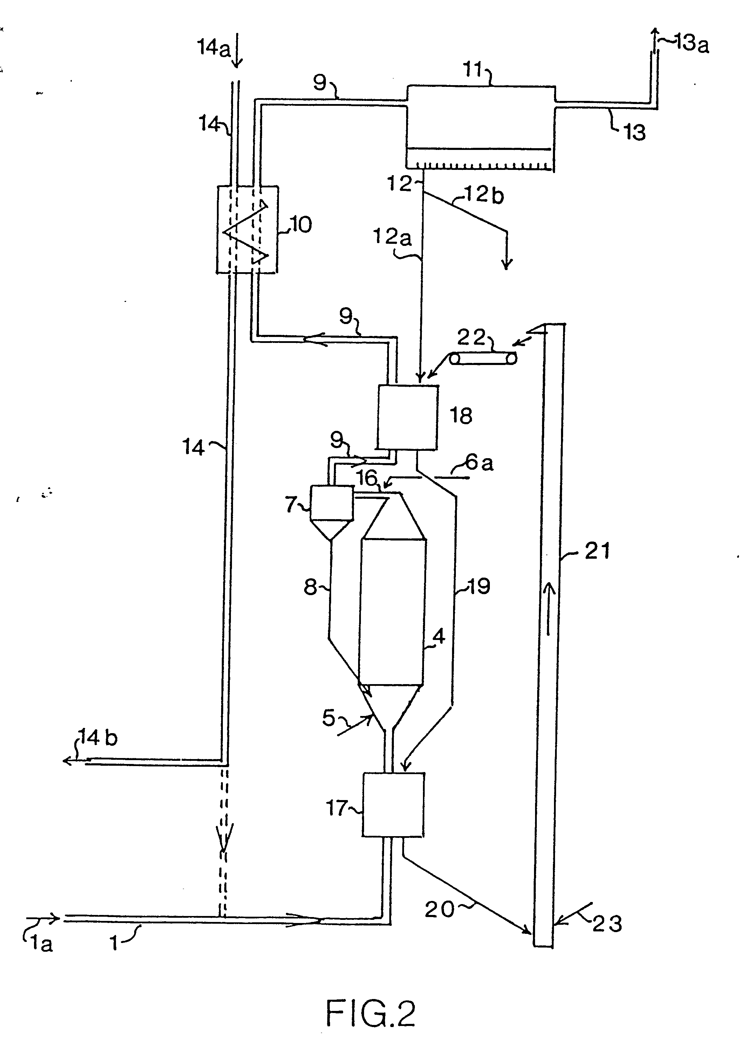

Fig. 2 shows a modified embodiment of the plant according to the invention. The components of the plant identical with the similar ones in Fig. 1 are indicated by the same reference numerals as in Fig. 1. As indicated in Fig. 2, a part of the ashes separated through the outlet 12 of the filter 11 is passed through the branching 12a to a heat exchanger 18 coupled after the separator cyclone 7 in the downstream direction of the flue gas. Not utilized ashes are carried away through the outlet 12b. The approx. 150°C hot ash fraction deriving from 12a is heated in the heat exchanger by means of the approx. 900°C hot exhaust gas from the separator cyclone to approx. 850°C and passed as heat-transfer medium through the pipe 19 to the heat exchanger 17 coupled upstream of the suspension reactor 4, the heat of the heat-transfer medium being utilized in said heat exchanger to heat the boiler flue gas to approx. 750°C. The now approx. 400°C hot ashes are then passed through the pipe 20 to the conveyor 21, where at the base of same at 23 limestone is added to the ashes. Via the conveyor 22 the ashes, having at this stage a temperature of approx. 350°C, are recycled together with the added lime to the heat exchanger 18 for renewed preheating in order to act again as heat transfer medium after having been supplemented by ashes from the pipe 12a for maintaining a suitable gas/solid matter ratio. The addition of lime to the boiler flue gas is preferably made in the heat exchanger 17 by simple dispersion in connection with the heat emission from the heat-transfer medium, a small amount of lime being also added to the flue gas in the heat exchanger 18, where the lime, however, will only help cooling the flue gas.

To avoid the latter addition of lime before it has reacted with the gas, the lime addition may alternatively be made directly to the heat exchanger 17.

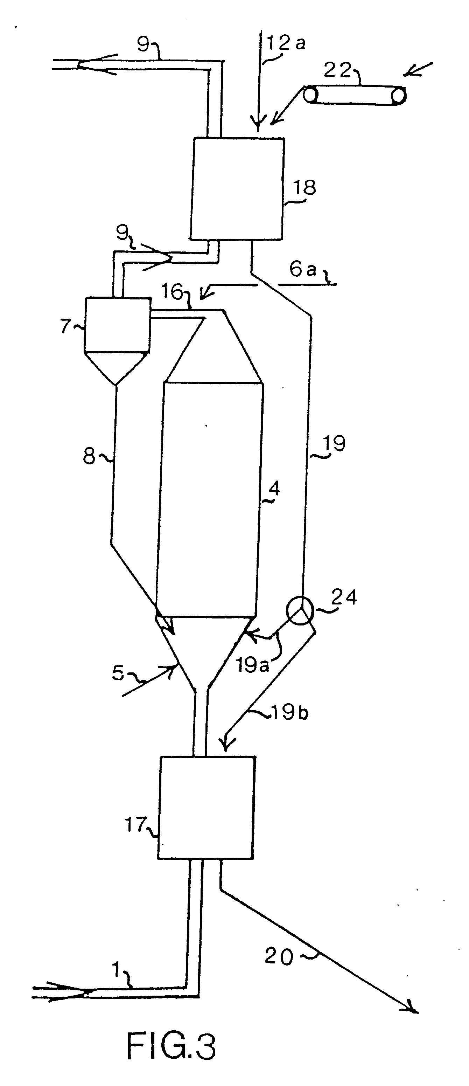

In Fig. 3, the references of which correspond to those of Fig. 2 apart from references especially mentioned below, 24 is a movable splitting gate mounted in the pipe 19, and 19a and 19b are branches of this splitting gate. By means of the latter it is possible to direct the total amount of flyash from the branching-off 12a and which has been preheated in the heat exchanger 18 either as heat-transfer medium through pipebranch 19b to heat exchanger 17 or through pipebranch 19a back to the suspension reactor 4 to obtain the necessary ash concentration and CaCO₃ recirculation and/or renewed thermic treatment in the reactor or to divide the flyash stream in pipe 19 so that only a partial stream is passed through pipe 19a to the reactor 4 and the remaining other partial stream is passed through pipe 19b as heat transfer medium to the heat exchanger 17. A corresponding recycling of flyash from the flue gas filter to the suspension reactor may also be made in the plant embodiment shown in Fig. 1 without appearing directly from this figure.

The product derived from an installation of the type described above, and which is carried away through the outlet 12, will contain substantial amounts of $CaSO_4$ in the form of anhydrite. If, for instance, 100 kg of coal fired in the boiler plant contains 1 kg of sulphur and 15 kg of ashes, you will get, if all the sulphur is bonded, 2.5 kg of $SO_3$ to 15 kg of ashes. 1.75 kg of CaO are bonded to the said 2.5 kg of $SO_3$, which means that the $SO_3$ percentage in the residual product becomes 13. To this should be added that part of CaO will react with the ashes to form i.a. $C_2S$, whereby the $SO_3$ content could fall to 8 to 10% of the residual product.

Such ashes, if desired, could be used for admixing with cement as it will have better hydraulic properties than ordinary flyash which is also used as cement additive and obtained as residual product from fluid-bed boilers.

To further ensure that the $CaSO_4$-containing products do not contain partly sulphatized or unreacted material the following two known methods separately or in combination may be used:

A grinding aid such as sand of a suitable particle size is added to the suspension during its retention in the suspension reactor. Due to the circulation of material in the latter the sand particles are further grinding the product treated in the reactor to a fine fraction which is in the subsequent separator cyclone separated from the coarser partly sulphatized and/or unreacted product fraction so that practically nearly all sulphatized or unreacted product is recirculated while only a nearly non-sulphatized fine fraction in suspension is fed to the electrofilter for separation as an ash rest from the latter.

Alternatively, the limestone added to the boiler flue gas may be impregnated with a surface activating means such as calcium chloride ($CaCl_2$). Due to the activated surface of the limestone the product ($CaSO_4$) formed in the reactor is separated in the separator cyclone from the coarser, partly sulphatized and/or unreacted product fraction and also in this case it is ensured that the fine fraction which in suspension is fed to the electrofilter is only an approximately non-sulphatized product which is then separated as an ash rest in the filter.

## Claims

1. A method for simultaneous cleaning of flyash-containing flue gas from a fossil fuel fired boiler plant, such as a power station, for the sulphur oxides ($SO_x$) and nitrogen oxides ($NO_x$) contained in the flue gas, ground limestone ($CaCO_3$) being added to the exhaust gas from the boiler and the flue gas cleaning being made in a suspension reactor with appertaining separator cyclone coupled after the boiler in the downstream direction of the flue gas through recycling back to the suspension reactor of a separated coarser and still sulphatized fraction of the product suspended in the flue gas and in a flue gas filter coupled after the suspension reactor for precipitation of the fine fraction of the suspension, **charactterized** in that the boiler flue gas with its content of flyash and $CaCO_3$ is heated to approx. 750°C by means of the heat in the exhaust gas from the suspension reactor, that the thus heated flue gas is then fed to the suspension reactor in which the temperature is raised to 800-900°C by burning of the carbon contained in the flyash and if necessary of fuel added separately to the reactor so that the $SO_x$ contained in the flue gas through the heat treatment in the reactor is bonded as calcium sulphate ($CaSO_4$) and that during the heat treatment in the suspension reactor and its separator cyclone ammonia ($NH_3$) is further fed to the boiler flue gas for reduction of the $NO_x$-content of the flue gas by formation of free nitrogen ($N_2$) and water vapours.

2. A method according to claim 1, **characterized** in that a part of the ashes separated in the flue gas filter after heat exchange with the exhaust gas from the suspension reactor separator cyclone is utilized as heat-transfer medium for heat exchange with the boiler flue gas prior to the latter being fed to the suspension reactor, whereafter the ashes are recirculated for renewed heat exchange with the exhaust gas from the separator cyclone.

3. A method according to claim 1, **characterized** in that ammonia ($NH_3$) is fed to the flue gas directly after the reactor in the gas pipe between the reactor and its separator cyclone.

4. A method according to claims 1 and 2, **characterized** in that the addition of ground limestone ($CaCO_3$) to the boiler flue gas is initially made to the amount of ashes utilised as heat-transfer medium during its recycling for heat exchange with the off-gas of the separator cyclone, whereupon the addition of limestone to the boiler flue gas is made in connection with the heat exchange between same and the now limestone-carrying heat-transfer medium before the boiler flue gas is passed to the suspension reactor.

5. A method according to claims 1-3, **characterized** in that the ashes separated in the flue gas filter or part of these ashes after preheating by heat exchange with the exhaust gas from the suspension reactor is recycled to the suspension reactor for renewed thermic treatment in the latter in order to remove the still remaining sulphate in said ashes.

6. A plant for carrying out the method according to claims 1 and 2, comprising a suspension reactor (4) with appertaining separator cyclone (7), means (2, 6, 6a) for addition of limestone and ammonia to the boiler flue gas treated in the plant, a preheater (10) for preheating the combustion air fed to the boiler and a flue gas filter (11) for cleaning the exhaust gas from the plant, **characterized** in a heat exchanger (3) for heating the boiler flue gas by means of the heat in the exhaust gas fed from the separator cyclone (7) to the heat exchanger (3) before the boiler flue gas is fed to the suspension reactor (4).

7. A plant according to claim 6, **characterized** in means (12, 12b) for feeding a part of the ashes separated in the flue gas filter (11) to a heat exchanger (18) which downstream of the direction of the flue gas is coupled after the separator cyclone (7) of the suspension reactor (4), and which utilizes the heat of the exhaust gas therefrom, means (19) for directing the now heated ashes as heat-transfer medium from the said heat exchanger (18) directly to the heat exchanger (17) coupled upstream of the suspension reactor (4) for heating the boiler flue gas, means (20, 21, 22) for recycling the heat-transfer medium after giving-off heat in the heat exchanger (17) to the heat exchanger (18) coupled after the suspension reactor, together with means (23) for adding limestone to the heat-transfer medium.

8. A plant according to claim 6, **characterized** in that the means (6, 6a) for adding ammonia to the flue gas are mounted in the gas duct (16) immediatly after the suspension reactor (4) between the latter and the separator cyclone (7).

9. A plant according to claims 6 and 7, **characterized** in that both the heat exchanger (17) coupled upstream of the suspension reactor (4) in the travelling direction of the flue gas and the heat exchanger (18) coupled downstream of the reactor are of the cyclone type for countercurrent heat exchange between gas and solid matter.

10. A plant according to claims 6 and 7, **characterized** in means (12, 12a) for feeding ashes separated in the flue gas filter (11) or part of these ashes to the heat exchanger (18) for heat exchange with the exhaust gas from the suspension reactor (4), and means (19, 19a) for feeding the thus preheated ashes or part thereof to the suspension reactor (4) to renewed treatment in same.

11. A plant according to claim 10, **characterized** in that the pipe (19) has a movable splitting gate (24) and two branches (19a, 19b) for recycling of flyash separated in the flue gas filter (11) back to the suspension reactor (4) and/or for transporting the heat-transferring flyash to the heat exchanger (17).

FIG.1

FIG.2

FIG.3